# EUROPEAN PATENT APPLICATION

(11) **EP 1 150 403 A1**
(43) Date of publication of application: **31.10.2001**
(21) Application number: 99959809.7
(22) Date of filing: 14.12.1999
(51) Int. Cl.: H01S 3/10, H01S 3/067

(54) **GAIN EQUALIZER, LIGHT AMPLIFIER AND OPTICAL COMMUNICATION SYSTEM**

(30) Priority: 16.12.1998 JP 35755898
(71) Applicant: Mitsubishi Cable Industries, Ltd., Amagasaki-shi Hyogo 660-0856 (JP)
(72) Inventor: IMAMURA, Kazuo, Itami Works, Itami-shi, Hyogo 664-0027 (JP); GENJI, Takeshi, Itami Works, Itami-shi, Hyogo 664-0027 (JP); SAWADA, Hisashi, Itami Works, Itami-shi, Hyogo 664-0027 (JP); YOSHIDA, Minoru, Itami Works, Itami-shi, Hyogo664-00 27 (JP)
(74) Representative: Zinnecker, Armin, Dipl.-Ing.
(86) International application number: JP9907023
(87) International publication number: WO0036714

(57) **Abstract**

The optical fiber amplifier of this invention is fabricated by using an erbium-doped optical fiber core wire **1** in which a plurality of long-period fiber gratings **21** functioning as a gain equalizer are written in the core with UV laser. Each of the fiber gratings **21** corresponds to periodical modulation of the refractive index within the core caused by irradiating the optical fiber core wire **1** with UV laser through a coat layer. Within the optical fiber core wire **1**, the fiber grating **21** compensates and equalizes wavelength dependency of the gain, so as to efficiently realize equal amplification over a wide wavelength band.

## Description

### Technical Field

The present invention relates to a gain equalizer used for compensating wavelength dependency of a gain of a gain medium for amplifying light when the gain is varied depending upon the wavelength. Also, the present invention relates to an optical fiber and a light amplifier containing the gain equalizer and an optical fiber communication system including the same.

### Background Art

In the field of optical communication, a wavelength division multiplexing (WDM) method is recently actively developed. In the wavelength division multiplexing method, light of a plurality of wavelengths (signal light) are transmitted through an optical fiber and divided into light of the respective wavelengths at a receiver, and hence, signal light of a different wavelength affects as noise. In particular, when the gain of an optical fiber amplifier for amplifying signal light has strong wavelength dependency, signal light resulting from the amplification is largely varied in the intensity. Therefore, the variation should be compensated.

For compensating the variation in the light intensity, a loss filtering device is conventionally proposed to provide at the output side of an optical fiber amplifier ("Optical Gain Equalizer for Optical Fiber Amplifier", NEC technical report Vol. 51, No. 4/1998, pp. 49-53). According to this report, the wavelength dependency of the intensity of signal light resulting from amplification is reduced by using a centralized loss filtering device including a combination of plural etalon filters, thereby equalizing the wavelength characteristics of the intensity of output light.

It is also proposed that such a centralized loss filtering device is constructed from an optical fiber grating ("A Gain Flattened EDFA using Residual Stress Released Type Long-period Fiber Grating Filter in High-silica Core Fiber", The Institute of Electronics, Information and Communication Engineers, Electronics Society Conference, '98C-3-2, p. 136). In this paper, a long-period fiber grating fabricated by releasing residual stress of a pure quartz core fiber is used as the loss filtering device.

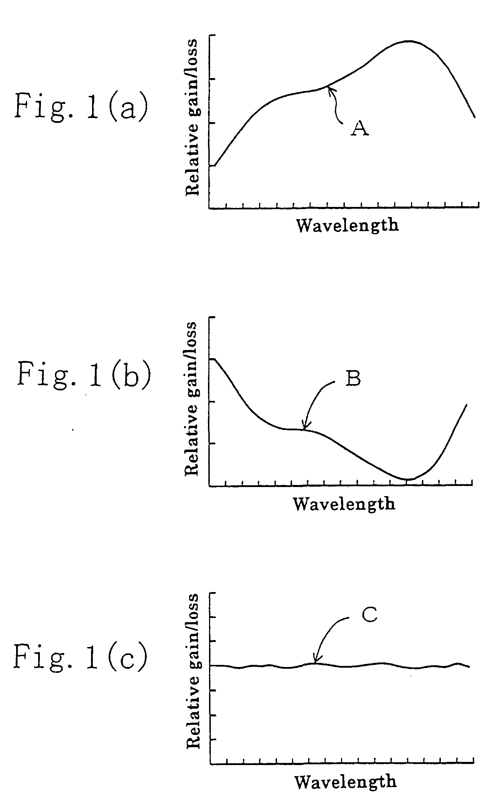

Any of conventional loss filtering devices is used, after amplifying light with a gain medium such as a rare earth-doped optical fiber, for filtering the amplified light. In this case, the filtering characteristic of the loss filtering device is determined in accordance with the ultimate gain characteristic of the entire gain medium. When the gain characteristic of the entire gain medium has wavelength dependency shown, for example, as a curve **A** of Fig. **1(a),** the filtering characteristic of the loss filtering device is designed to have wavelength dependency shown as a curve **B** of Fig. **1(b).** The curve **B** has a profile for causing a larger loss in a portion with a relatively large gain in the curve **A**. The intensity of the output light amplified by the gain medium attains the wavelength dependency in accordance with the gain characteristic (shown as the curve **A**) of Fig. **1(a),** and thereafter, a component with relatively high intensity of the output light is partly cut off by the loss filtering device. Therefore, light shown with a curve **C** of Fig. **1(c)** can be ultimately obtained.

In this manner, the filtering characteristic of the conventional loss filtering device has been determined on the basis of the wavelength dependency of the gain exhibited by the entire gain medium. However, when signal light is propagated through the gain medium, the gain given to the signal light is changed along the travel direction of the signal light. In other words, the amplification factor of the signal light is changed in accordance with the position thereof within the gain medium.

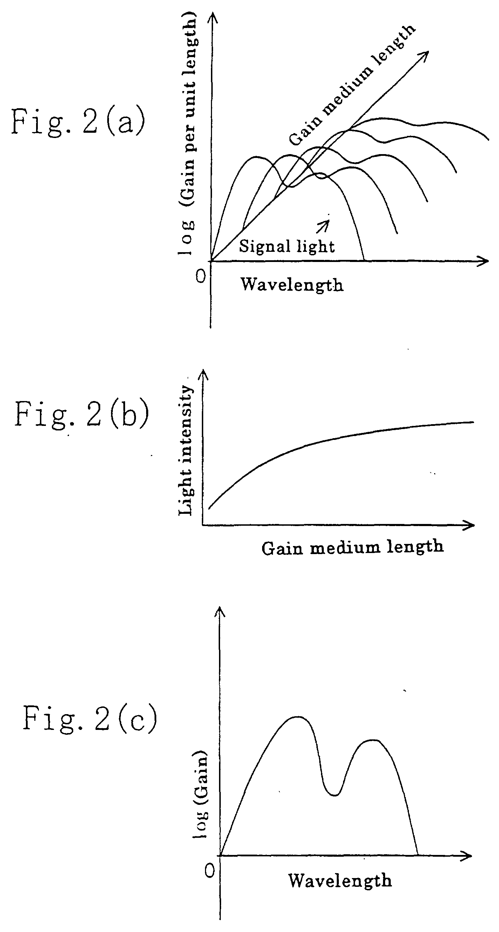

Fig. **2(a)** exemplifies wavelength dependency of a gain given to signal light propagated through a gain medium. The intensity of the signal light obtained immediately after entering the gain medium is relatively low but a larger gain can be obtained. Thereafter, the signal light is amplified while it is propagated through the gain medium, and the gain is reduced as the intensity of the signal light is increased. Fig. **2(a)** shows that a gain with strong wavelength dependency at the input end becomes smaller toward to a deeper portion within the gain medium and attains more equalized wavelength dependency.

Fig. **2(b)** shows how the intensity of signal light propagated through a gain medium is increased in accordance with the propagation distance (the length **L** of the gain medium). As understood from Fig. **2(b)**, the intensity of the signal light is rapidly increased immediately after entering the gain medium and is eventually saturated. It is understood that the gain is large with respect to weak signal light and is small with respect to strong signal light. Therefore, the gain is reduced in accordance with the increase of the length **L** of the gain medium, and the wavelength dependency of the gain is reduced accordingly. In this manner, the gain and the wavelength dependency of the gain are varied depending upon the position in the gain medium, and more precisely, the gain is varied in accordance with the interaction between the gain medium and the propagated light (signal light).

Fig. **2(c)** shows the gain characteristic of an entire gain medium obtained by allowing light with given intensity to enter the gain medium with a given size. This gain characteristic is obtained by integrating the gain characteristics varied depending upon the position as shown in Fig. **2(a)**. In the conventional technique, after measuring such a gain characteristic, a centralized loss filter for compensating the gain characteristic is designed to be inserted in a portion behind the gain medium. However, when the length of the gain medium is changed or the intensity of input light is changed, the degrees of the interaction between the medium and the signal light in various positions of the gain medium are changed, so that the gain characteristic of Fig. **2(c)** can be also changed. When such a change is caused, it is difficult to accurately presume how the gain characteristic of Fig. **2(c)** is changed, and it is not easy to modify the characteristic of the centralized loss filtering device.

As described above, although the gain characteristic is varied depending upon the position in the gain medium, attention is paid merely to the wavelength characteristic (as shown in Fig. **2(c)**) of the ultimate gain in the conventional technique, so as to equalize the wavelength dependency by filtering light resulting from amplification. In such posteriori compensation, not only the connection loss of the loss filtering device is large but also pumping energy is consumed on wasteful gain within the gain medium. Also, in the case where the intensity of input light is changed, there arises a problem that sufficient equalization cannot be obtained.

The present invention was devised in consideration of the aforementioned disadvantages, and a principal object of the invention is providing a gain equalizer capable of controlling the gain characteristic of a gain medium itself by reducing the wavelength dependency of a gain within the gain medium. Another object of the invention is providing a light amplifier and an optical fiber containing the gain equalizer and a method for fabricating the same as well as an optical fiber communication system including an optical fiber amplifier containing the gain equalizer.

### Disclosure of the Invention

The gain equalizer of this invention includes a refractive index modulation structure formed within a gain medium for amplifying light in which a gain is varied in accordance with a wavelength of the light, and the refractive index modulation structure causes a loss in light propagated through the gain medium, whereby reducing wavelength dependency of the gain within the gain medium.

The refractive index modulation structure is preferably formed from a grating whose refractive index is substantially periodically changed along a travel direction of the light.

The gain medium can be included in a rare earth-doped optical fiber.

The light amplifier of this invention includes a gain medium for amplifying light in which a gain is varied in accordance with a wavelength of the light; and a gain equalizer for reducing wavelength dependency of the gain within the gain medium, and the gain equalizer includes a refractive index modulation structure formed within the gain medium for causing a loss in light propagated through the gain medium.

The refractive index modulation structure is preferably disposed in a plurality of positions within the gain medium.

The gain medium can be included in a rare earth-doped optical fiber, and the refractive index modulation structure can be formed from a fiber grating.

The fiber grating is preferably formed in a large number in a portion close to an end of the rare earth-doped optical fiber from which signal light to be amplified enters.

Preferably, the light amplifier is an optical fiber amplifier.

The optical fiber communication system of this invention includes a signal light source for generating wavelength division multiplexed signal light; an optical fiber network for propagating the signal light; and an optical fiber amplifier for amplifying the signal light at a midway point of the optical fiber network, and the optical fiber amplifier includes a rare earth-doped optical fiber, a pump light source for pumping the rare earth-doped optical fiber and a gain equalizer formed in the rare earth-doped optical fiber, and the gain equalizer causes a loss in light propagated through the rare earth-doped optical fiber, whereby reducing wavelength dependency of a gain in the rare earth-optical fiber.

The gain equalizer is preferably composed of one or more fiber gratings formed in the rare earth-doped optical fiber.

The fiber gratings are preferably formed in a large number in a portion close to an end of the rare earth-doped optical fiber from which the signal light enters.

The method for fabricating a gain equalizer-containing optical fiber of this invention includes the steps of preparing a rare earth-doped optical fiber core wire including a core doped with rare earth, a cladding surrounding the core and a UV transmitting resin coat layer for covering an outer face of the cladding; and forming a gain equalizer in the core by writing a fiber grating in the core by irradiating the core with UV through the coat layer.

The step of forming a gain equalizer in the core is preferably conducted with measuring a gain of the rare earth-doped optical fiber core.

Since the gain equalizer of this invention includes a refractive index modulation structure formed within a gain medium, the wavelength dependency of a gain can be more efficiently equalized with a smaller loss than a conventional loss filtering device for compensating the wavelength dependency of light intensity by causing a loss in amplified light. Also, the gain equalizer can realize not only a lumped gain equalizer but also a distributed gain equalizer.

In the case where the refractive index modulation structure is formed from a grating whose refractive index is substantially periodically changed along the travel direction of light, an optional filtering characteristic can be obtained by adjusting the grating period.

In the case where a rare earth-doped optical fiber is used as the gain medium, the gain characteristic is changed along the lengthwise direction of the fiber. Therefore, when the gain equalizer of this invention is formed as a distributed gain equalizer, the gain can be efficiently controlled. Therefore, without inserting a filter device at a subsequent stage of an optical fiber amplifier, signal light can be equally amplified over a wide wavelength range, which is suitable to the wavelength division multiplexing method.

### Brief Description of Drawings

Fig. **1(a)** is a graph of a gain characteristic of an entire gain medium, Fig. **1(b)** is a graph of a filtering characteristic of a conventional centralized filter device and Fig. **1(c)** is a graph of wavelength dependency of amplified light resulting from filtering.
Fig. **2(a)** shows an example of wavelength dependency of a gain given to light (signal light) propagated through a gain medium, Fig. **2(b)** shows how the intensity of the signal light propagated through the gain medium is amplified in accordance with a propagation distance (a length **L** of the gain medium) and Fig. **2(c)** shows a gain characteristic of an entire gain medium obtained when signal light with given intensity is input to the gain medium with a given size.

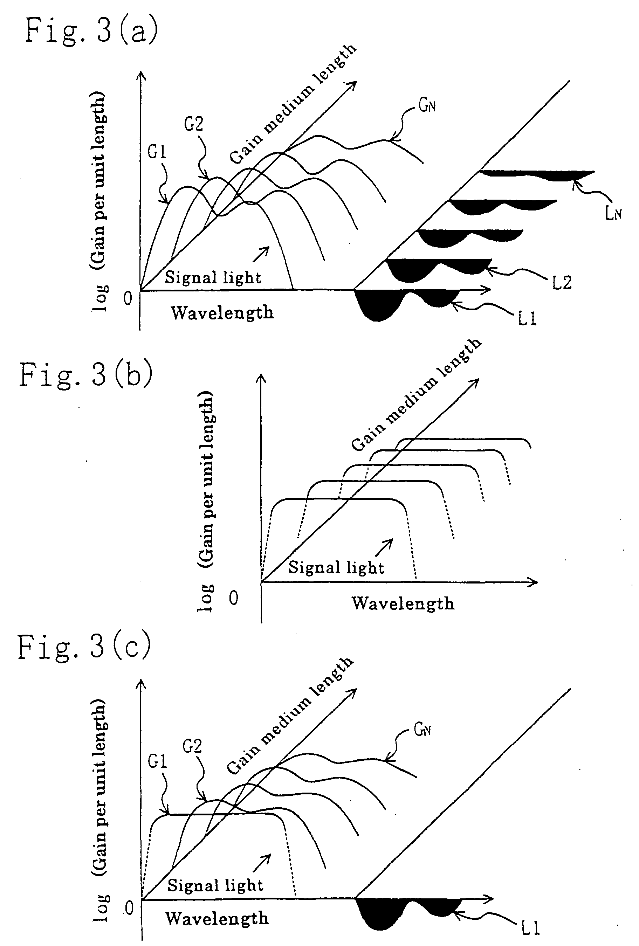

Fig. **3(a)** is a diagram of gain characteristics **G**_{**1**} through **G**_{**n**} for showing how the wavelength characteristic of a gain is changed along a lengthwise direction of a gain medium and filtering characteristics **L**_{**1**} through **L**_{**n**} of refractive index modulation structures formed in plural positions within the gain medium, Fig. **3(b)** is a diagram of gain characteristics obtained by forming a plurality of refractive index modulation structures within a gain medium and Fig. **3(c)** is a diagram of a gain characteristic obtained by forming one refractive index modulation structure within a gain medium.

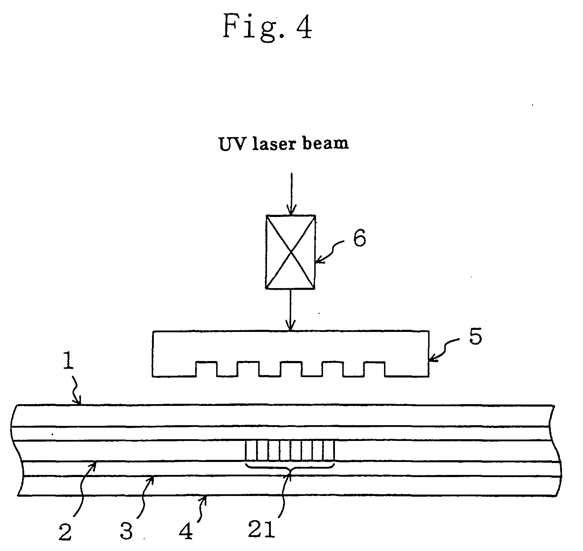

Fig. **4** is a cross-sectional view taken along an axial direction of a rare earth-doped optical fiber core wire **1** in which a long-period fiber grating functioning as a gain equalizer is formed.

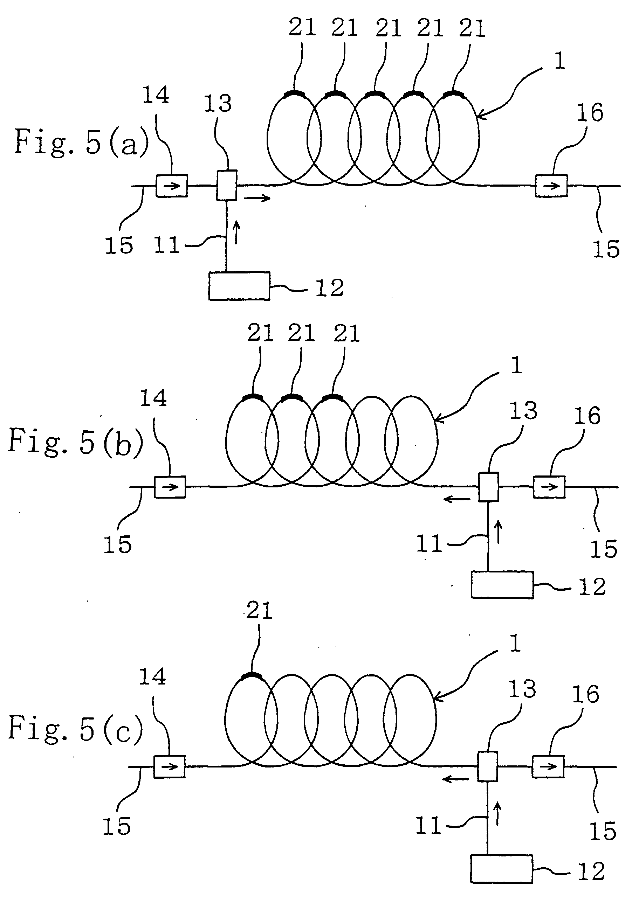

Fig. **5(a)** is a schematic diagram for showing the entire structure of an optical fiber amplifier, according to an embodiment of the invention, of a forward pumping type in which a plurality of fiber gratings are formed within an erbium-doped optical fiber, Fig. **5(b)** is a schematic diagram of a modified optical fiber amplifier of a backward pumping type and Fig. **5(c)** is a schematic diagram for showing the entire structure of an optical fiber amplifier of the backward pumping type in which a single fiber grating is formed within an erbium-doped optical fiber.

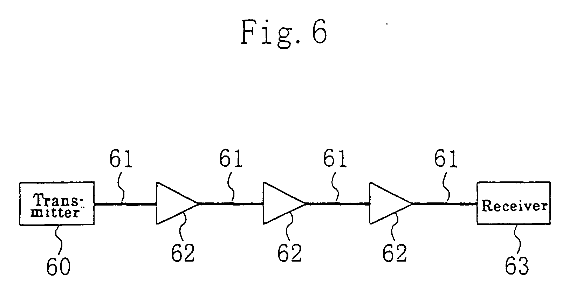

Fig. **6** is a diagram for showing the structure of an optical fiber communication system according to an embodiment of the invention.

### Best Mode for Carrying Out the Invention

The principle of the operation of a gain equalizer of this invention will now be described with reference to Figs. **3(a)** through **3(c).** Fig. **3(a)** shows gain characteristics **G**_{**1**} through **G**_{**N**} for illustrating how the wavelength dependency of a gain is changed along the lengthwise direction of a gain medium and filtering characteristics (loss characteristics) **L**_{**1**} through **L**_{**N**} of refractive index modulation structures formed in plural positions within the gain medium (wherein N is an integer of 2 or more). In this invention, a plurality of refractive index modulation structures respectively having different filtering functions are distributed within the gain medium. Also, the filtering characteristic of each refractive index modulation structure is designed in accordance with the gain characteristic of the position where the refractive index modulation structure is disposed.

A "refractive index modulation structure" herein means a structure for modulating the refractive index substantially periodically along the travel direction of signal light (namely, a direction toward a larger length **L** of the gain medium), and functions as a grating (diffraction grating). In the case where a refractive index modulation structure has a specific modulation period of the refractive index, signal light of a wavelength according to that period is filtered, for example, reflected or radiated by the refractive index modulation structure. In this invention, however, chirping is caused by distributing the modulation periods of the refractive index modulation structures, and hence, the respective refractive index modulation structures exhibit the filtering characteristics **L**_{**1**} through **L**_{**N**} each having a given profile changed in accordance with the wavelength of signal light.

When the refractive index modulation structures having the filtering characteristics **L**_{**1**} through **L**_{**N**} are formed in appropriate positions within the gain medium, the gain characteristic of the medium is changed as shown in Fig. **3(b)**. The wavelength dependency of the gain is equalized in the respective positions within the gain medium, so as to substantially equalize the amplification of signal light in a wide wavelength band.

Assuming that the length of the gain medium necessary for sufficiently saturating the signal light intensity is a length **L**_{**s**}**,** if the actual gain medium is sufficiently longer than the length **L**_{**s**}**,** the gain equalizer may be provided within a range from the signal light input end to a position corresponding to the length **L**_{**s**} of the gain medium. As understood from Fig. **3(b),** as a distance from the signal light input end is larger, a difference in the gain given per unit length between signal light of different wavelengths is reduced, and the necessity for equalizing the wavelength dependency of the gain is smaller. Accordingly, a larger number of refractive index modulation structures are preferably provided in a region closer to the signal light input end. If merely the refractive index modulation structures each having the filtering characteristic **L**_{**i**} are collectively formed in the corresponding positions of the gain medium, the gain characteristic as shown in Fig. **3(c)** is obtained.

When a refractive index modulation structure having a filtering characteristic **L**_{**i**} (wherein 1 ≦ i ≦ N) is formed in a given position within a gain medium, a certain kind of interaction seems to be caused between the gain medium and the refractive index modulation structure in the vicinity of the position. As a result, a gain characteristic **G**_{**i**} previously obtained through measurement may be changed. Accordingly, the filtering characteristic **L**_{**i**} designed for compensating the previously measured gain characteristic **G**_{**i**} may not be optimal for compensating a gain characteristic **G**_{**i**}**'** resulting from the interaction. Therefore, in order to optimize the filtering characteristic **L**_{**i**}**,** it is preferred that while forming a refractive index modulation structure in the gain medium, a gain characteristic is actually measured in that position, so as to adjust the filtering characteristic of the refractive index modulation structure with the measured gain characteristic observed. When a refractive index modulation structure is formed in a gain medium, the pump state is perturbed, so that not only the height of a crest but also the depth of a trough is reduced in a curve exhibiting the gain characteristic. This means that the pumping energy is efficiently used in the gain medium.

Accordingly, in distributing a plurality of refractive index modulation structures within a gain medium, the filtering characteristic of each refractive index modulation structure is preferably optimized while forming the refractive index modulation structures one by one from the signal light input end. Needless to say, after determining the respective filtering characteristics once, the refractive index modulation structures can be simultaneously formed in a similar gain medium. In this case, there is no need to measure a gain characteristic of each position within the gain medium.

### - Rare earth-doped optical fiber -

A preferred embodiment of the invention using a rare earth-doped optical fiber as a gain medium will now be described with reference to Fig. **4**.

Fig. **4** shows the cross-sectional structure taken along an axial direction of a rare earth-doped optical fiber core wire **1** in which a long-period fiber grating functioning as a gain equalizer is formed in a core. As understood from Fig. **4**, the optical fiber core wire **1** includes a core **2** in which a long-period grating **21** is formed, a cladding **3** formed around the core **2**, and a coat layer **4** for covering the outer face of the cladding **3**.

In this embodiment, the grating **21** is written in the core **2** through UV irradiation. More specifically, after covering glass portions with the coat layer **4** of a UV transmitting resin, the glass portions **(2** and **3)** covered with the coat layer **4** are irradiated with a grating pattern of a UV laser beam of a specific wavelength band through the coat layer **4**, thereby forming a refractive index modulation structure in the core **2**. This technique utilizes a phenomenon that an optically induced index change is caused by irradiating glass with UV. The mechanism of the optically induced index change caused by UV has not been completely made clear yet, but various theories including the following have been proposed: One theory is based on the Kramers - Kroning mechanism in which a bond between Ge and SiO₂ (quartz glass) is changed through UV irradiation so as to cause a refractive index change; another theory is based on a compression model in which a glass bond is cut by UV irradiation so as to collapse the glass structure, which increases the density to increase the refractive index; and still another theory is based on a dipole model.

In writing the grating **21**, the coat layer **4** is generally removed so as to partially expose the glass portions. However, when the grating **21** is thus written, a procedure for forming the coat layer **4** again is additionally necessary. In addition, even though the glass portions are covered with the coat layer again, the mechanical strength of the optical fiber core wire **1** is disadvantageously lowered. Since the coat layer **4** is not removed in this embodiment, the lowering of the mechanical strength can be avoided, resulting in largely improving the reliability of the optical fiber core wire **1**.

Now, a method for writing the grating in the optical fiber core wire **1** will be described in detail with reference to Fig. **4**.

The core **2** used in this embodiment is doped with Ge in a concentration substantially the same as that included in a core of an optical fiber with the general specifications. An optical fiber with the general specifications herein means an optical fiber core wire to be connected to the optical fiber core wire **1**. The core of such an optical fiber core wire is generally doped with Ge in a concentration for attaining a specific refractive index difference of approximately 0.3 through 1%.

In order to stationarily increase the optically induced index change in the core **2** by the UV irradiation, the core **2** is preferably doped not only with Ge but also with another dopant of Sn, Sn and Al, or Sn, Al and B. A preferable range in the concentration of Sn is 10000 through 15000 ppm. A preferable range in the concentration of Al is 500 through 2000 ppm, and a preferable range in the concentration of B is 10000 through 45000 ppm.

When the core is co-doped with Sn, the refractive index change caused by the UV irradiation is increased as compared with that in a core doped with Ge in a general concentration alone. As a result, the degree of the refractive index modulation is effectively increased. Accordingly, not only the grating can be effectively written but also the filtering performance of the grating can be improved.

The concentration of Ge is preferably equivalent to that in the core of an optical fiber to be connected because connection loss can be thus prevented from increasing in connecting to the optical fiber of the general specifications.

In order to obtain a gain, the core **2** is doped with erbium, that is, one of the rare earth elements. A preferable range in the concentration of erbium is several tens through several thousands ppm. Also, Nd, Pr, Tm or the like may be doped as a rare earth element other than erbium.

The dopant may be added by any of the known methods. When Ge and Sn are doped by, for example, immersion, compounds of Ge and Sn (for example, SnCl₂·2H₂O with respect to Sn) are mixed with methyl alcohol, and a core suit is immersed in the mixed solution.

The coat layer **4** of this embodiment is made from a UV transmitting resin having a property to transmit UV. The material for the coat layer **4** may be any UV transmitting resin that can transmit at least UV of a specific wavelength band (such as a 250 nm through 270 nm band) irradiated for writing the grating **21**. Preferably, a resin that can minimally absorb but transmit UV of the specific wavelength band and is cured by absorbing UV of a wavelength longer or shorter than the specific wavelength band is used. Specifically, the coat layer **4** is most preferably formed from a resin that has different UV absorbing characteristics depending upon wavelength for serving as a UV transmitting resin with respect to the specific wavelength band but serving as a UV curing resin with respect to a wavelength band shorter or longer than the specific wavelength band. An example of such a resin is a mixture obtained by adding, to acrylate of the urethane family or the epoxy family, a photoinitiator for starting/accelerating a curing reaction when irradiated with UV of a wavelength band, for example, shorter than 240 nm or longer than 270 nm.

From the view point of productivity, the coat layer **4** is most preferably formed by single coating immediately after drawing an optical fiber element wire. The "thickness" of the coat layer may be determined so as to attain, after writing the grating, substantially the same mechanical strength characteristic as that of a general communication optical fiber core wire to be connected to the fiber grating. Specifically, the thickness is at least 30 *µ* m. In an optical fiber element wire of 125 *µ* m, the coat layer **4** is preferably formed in a thickness of 30 through 50 *µ* m, for example, 37.5 *µ* m. Since the coat layer **4** is not removed in writing the grating in this invention, the strength of the optical fiber is minimally lowered, and hence, sufficient mechanical strength can be attained even when the coat layer **4** has a thickness of 50 *µ* m or less.

The grating **21** may be written by any of the various known methods. For example, a mask method may be employed. In this case, a mask **5** in the shape of a grating is disposed in the immediate side of the optical fiber core wire **1** as shown in Fig. **4**, so that the mask **5** can be irradiated with a UV laser beam through a cylindrical lens system **6.** At this point, for example, a coherent UV laser beam of a wavelength of 266 nm corresponding to a frequency-quadrupled wavelength of a Nd-YAG laser, that is, a solid laser, is irradiated. In this manner, the grating **21** having a grating pitch according to the grating pitch of the mask **5** is written in the core **2**. When a solid laser is used, a laser beam having high spatial coherency can be obtained, which is convenient for writing the grating in the core **2** covered with the coat layer **4**. In this embodiment, a long-period fiber grating (having a grating length of 10 through 100 nm) for attaining refractive index modulation of an approximately 100 through 500 *µ* m period for realizing front coupling to the cladding is formed. As the mask **5**, one capable of forming a light intensity distribution for realizing the refractive index modulation of a desired period in the core **2** is used, and for example, an intensity modulation mask or a phase mask may be used.

Also, the "irradiation energy density" of UV is preferably set within the range between 1.5 and 4.0 kJ/cm² in order to suppress increase of the Young's modulus of the coat layer within a predetermined range. The UV irradiation may be conducted by any of various methods, for example, by repeating irradiation at a predetermined pulse frequency with a short pulse width and with constant energy of each pulse; by continuous irradiation; and by intermittent irradiation with large energy at intervals.

By any of the aforementioned methods, the fiber grating **21** can be formed in an optional position in the rare earth-doped optical fiber core wire **1.** In addition, the grating **21** can be written in a state where light is actually propagated through the optical fiber core wire **1**. Therefore, while observing the change of the gain characteristic caused by writing the grating **21**, the work for writing the grating **21** can be adjusted. As a result, the filtering characteristic of the grating **21** can be optimized, so as to avoid unwanted lowering of the gain.

The position for writing the fiber grating **21** within the rare earth-doped optical fiber core wire **1** is optionally determined but is preferably close to the signal light input end. In the case where a plurality of fiber gratings **21** are to be formed within one core **2** at intervals, a first fiber grating is written in the aforementioned manner, and then, a second fiber grating is written in the same manner in a position away from the first fiber grating along the travel direction of the signal light. In this manner, the plural fiber gratings are successively written, so as to obtain the rare earth-doped optical fiber core wire **1** in which the wavelength dependency of the gain is efficiently equalized.

Next, a method for adjusting the filtering characteristic of the fiber grating will be described. When the gain characteristic in a given position within the gain medium is indicated with the curve **A** of Fig. **1(a),** the filtering characteristic of a fiber grating to be formed in that position is substantially the same as that shown in Fig. **1(b).** In designing a fiber grating having such a filtering characteristic, the filtering characteristic can be controlled by any of or an appropriate combination of the following methods: (1) A method for adjusting change of the refractive index modulation period by using a plurality of masks having different periods or a chirp mask; (2) a method for adjusting the time for irradiating the core with UV; (3) a method for adjusting the spatial intensity distribution of the UV irradiation; and (4) a method for adjusting the stress applied to the fiber.

### - Optical fiber amplifier -

An optical fiber amplifier using the rare earth-doped optical fiber will now be described. First, Fig. **5(a)** is referred to. Fig. **5(a)** schematically shows the entire structure of the optical fiber amplifier of this embodiment.

The optical fiber amplifier includes an erbium-doped optical fiber core wire **1** including a plurality of fiber gratings **21,** and a pump light source **12** for pumping the erbium-doped optical fiber core wire **1.** The pump light source **12** is a laser of, for example, a 1.48 *µ*m wavelength band or a 0.98 *µ*m wavelength band, and pump light emitted from the pump light source **12** passes through an optical fiber **11** to be coupled to the erbium-doped optical fiber core wire **1** by an optical coupler **13.** The optical coupler **13** is coupled to signal light (of a wavelength of, for example, 1538 through 1564 nm) propagated through an optical fiber **15** through an optical isolator **14**. The signal light is amplified within the erbium-doped optical fiber core wire **1** and then coupled to the optical fiber **15** on the output side through an optical isolator **16**.

In the erbium-doped optical fiber core wire **1** of this embodiment, a plurality of fiber gratings **21** described with reference to Fig. **4** are formed, and the respective gratings **21** are designed to have various filtering characteristics (loss characteristics), for example, as shown in Fig. **3(a)**. As a result, the gain obtained within the erbium-doped optical fiber core wire **1** exhibits the wavelength dependency equalized as shown in Fig. **3(b)**, and the intensity distribution of light output from the erbium-doped optical fiber core wire **1** is equalized as shown in Fig. **1(c)**, resulting in obtaining the gain in a wide wavelength band.

In the structure of this embodiment, the gain can be efficiently equalized by finely causing a loss in each of a plurality of positions within the gain medium as shown in Fig. **3(a)**. This structure may be similarly employed in a backward pumping system in which the travel direction of the pump light is reverse to the travel direction of the signal light and in a forward pumping system in which the travel direction of the pump light accords with the travel direction of the signal light. This is because the gain is varied in accordance with the intensity of the signal light as shown in Fig. **3(a)**.

According to this optical fiber amplifier, the signal light can be equally amplified without inserting a conventional lumped filter device in a subsequent stage. Also, since the gain of the gain medium itself is directly controlled within the gain medium in this invention, the equalizing function has a characteristic that it is minimally affected by variation in the intensity of the signal light. Furthermore, since the fiber grating is written through the coat layer by using UV, the refractive index modulation structures can be easily formed in a plurality of positions within the erbium-doped optical fiber core wire **1**. In contrast, when a conventional filter device is inserted within the erbium-doped optical fiber core wire **1**, a large insertion loss is caused, and when a grating is written with the coat layer removed, not only it takes time but also a serious problem such as lowering of the mechanical strength can arise.

As obvious from the above description, for forming the gratings within the erbium-doped optical fiber core wire **1** so as to control the wavelength dependency of the gain, the method for writing the gratings described with reference to Fig. **4** is optimal, and a method for writing a grating with the coat layer removed is difficult to employ for practical use.

The positions for forming the fiber gratings **21** need not be at equal interval. Although the fiber gratings **21** are formed at equal interval over the entire length of the erbium-doped optical fiber **1** in Fig. **5(a)** for simplification, the positions for forming the fiber gratings **21** are not limited to those shown in this drawing.

Next, another embodiment of the optical fiber amplifier will be described with reference to Fig. **5(b)**. This optical fiber amplifier is of the backward pumping type, and is different from the optical fiber amplifier of the forward pumping type shown in Fig. **5(a)** in the following point: The pump light emitted from a pump light source **12** is input from the output end of the erbium-doped optical fiber **1**, so as to be propagated in a direction reverse to the travel direction of the signal light through the erbium-doped optical fiber **1**. Also, in the case shown in Fig. **5(b)**, the fiber gratings **21** are formed to be closer to the input end of the erbium-doped optical fiber **1.**

The gain obtained in the erbium-doped optical fiber 1 is larger in a position closer to the signal light input end. Therefore, when the positions for forming the fiber gratings 21 are closer to the signal light input end, the gain can be more efficiently equalized. This does not depend upon the travel direction of the pump light.

Fig. **5(c)** shows an example of a single fiber grating **21** formed in the erbium-doped optical fiber **1**. Even when the number of the fiber grating **21** is one, the function to equalize the wavelength dependency of the gain can be exhibited. However, in this case, the gain equalization is incomplete, and hence, a conventional lumpled filter device may be additionally provided behind the output end of the optical fiber amplifier.

### - Optical fiber communication system -

Ultimately, an optical fiber communication system including the optical fiber amplifier will be described with reference to Fig. **6**.

The optical fiber communication system of Fig. **6** includes a transmitter **60** for transmitting signal light, an optical fiber network **61** for transmitting the signal light, an optical fiber amplifier **62** for amplifying the signal light during the transmission, and a receiver **63** for receiving the signal light. The components other than the optical fiber amplifier **62** may be any of known components used in a conventional optical fiber communication system and the description is herein omitted. The optical fiber **62** has the aforementioned structure described with reference to Fig. **5**.

In such an optical fiber transmission system, the wavelength dependency of the optical fiber amplifier provided on the transmission path can be compensated so as to effectively reduce the gain deflection. Therefore, even in the wavelength division multiplexing method, it is possible to attain a remarkable effect that the intensity of signals of multiple channels is minimally varied.

The invention has been described with respect to the embodiments in which a gain medium is included in an optical fiber, which does not limit the invention. Since the wavelength dependency of a gain medium can be compensated for equalizing the profile according to the invention, the invention is widely applicable regardless of the kind of gain medium. The state of a gain medium may be a solid, a phase, a liquid or a combination thereof. Accordingly, the invention is also applicable to a light amplifier for a gas laser or a solid laser. When the gain equalizer of this invention is applied to a gas laser, for example, at least one optical filter formed by stacking dielectric thin films is inserted into a laser medium, so as to equalize the wavelength dependency of the gain. In this manner, the invention can provide a novel type of laser source capable of realizing laser action over a wide wavelength range.

### Industrial Applicability

The invention provides a gain equalizer capable of equalizing the wavelength dependency of a gain more efficiently with a smaller loss than a conventional loss filtering device for compensating the wavelength dependency of light intensity by causing a loss in amplified light. The gain equalizer of this invention is suitably applied to a light amplifier for an optical fiber amplifier, a gas laser, a solid laser and the like.

By using an optical fiber amplifier including the gain equalizer of this invention, variation in the intensity of signals of multiple channels can be suppressed in an optical fiber communication system of the wavelength division multiplexing method.

The gain equalizer of this invention can be formed in a core of a rare earth-doped optical fiber, so as to provide a gain equalizer-containing optical fiber suitably applied to an optical fiber communication system. In particular, according to a method for fabricating a gain equalizer-containing optical fiber of this invention, UV is irradiated through a UV transmitting resin layer, and hence, lowering of the mechanical strength of the optical fiber can be avoided. Thus, the gain equalizer-containing optical fiber with largely improved reliability can be fabricated.

## Claims

1. A gain equalizer comprising a refractive index modulation structure formed within a gain medium for amplifying light in which a gain is varied in accordance with a wavelength of the light,
the refractive index modulation structure causing a loss in light propagated through the gain medium, whereby reducing wavelength dependency of the gain within the gain medium.

2. The gain equalizer of Claim 1,
wherein the refractive index modulation structure is formed from a grating whose refractive index is substantially periodically changed along a travel direction of the light.

3. The gain equalizer of Claim 2,
wherein the gain medium is included in a rare earth-doped optical fiber.

4. A light amplifier comprising:
a gain medium for amplifying light in which a gain is varied in accordance with a wavelength of the light; and
a gain equalizer for reducing wavelength dependency of the gain within the gain medium,
the gain equalizer including a refractive index modulation structure formed within the gain medium for causing a loss in light propagated through the gain medium.

5. The light amplifier of Claim 4,
wherein the refractive index modulation structure is disposed in a plurality of positions within the gain medium.

6. The light amplifier of Claim 5,
wherein the gain medium is included in a rare earth-doped optical fiber, and
the refractive index modulation structure is formed from a fiber grating.

7. The light amplifier of Claim 6,
wherein the fiber grating is formed in a large number in a portion close to an end of the rare earth-doped optical fiber from which signal light to be amplified enters.

8. An optical fiber communication system comprising:
a signal light source for generating wavelength division multiplexed signal light;
an optical fiber network for propagating the signal light; and
an optical fiber amplifier for amplifying the signal light at a midway point of the optical fiber network,
the optical fiber amplifier including a rare earth-doped optical fiber, a pump light source for pumping the rare earth-doped optical fiber and a gain equalizer formed in the rare earth-doped optical fiber, and
the gain equalizer causing a loss in light propagated through the rare earth-doped optical fiber, whereby reducing wavelength dependency of a gain in the rare earth-optical fiber.

9. The optical fiber communication system of Claim 8,
wherein the gain equalizer is composed of one or more fiber gratings formed in the rare earth-doped optical fiber.

10. The optical fiber communication system of Claim 9,
wherein the fiber gratings are formed in a large number in a portion close to an end of the rare earth-doped optical fiber from which the signal light enters.

11. A method for fabricating a gain equalizer-containing optical fiber comprising the steps of:
preparing a rare earth-doped optical fiber core wire including a core doped with rare earth, a cladding surrounding the core and a UV transmitting resin coat layer for covering an outer face of the cladding; and
forming a gain equalizer in the core by writing a fiber grating in the core by irradiating the core with UV through the coat layer.

12. The method for fabricating a gain equalizer-containing optical fiber of Claim 11,
wherein the step of forming a gain equalizer in the core is conducted with measuring a gain of the rare earth-doped optical fiber core.
